# EUROPEAN PATENT APPLICATION

(11) **EP 4 783 703 A1**
(43) Date of publication of application: **29.07.2026**
(21) Application number: 23952668.4
(22) Date of filing: 21.09.2023
(51) Int. Cl.: H04W 72/231

(54) **INFORMATION PROCESSING METHOD, DEVICE, AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Dehns Germany Partnerschaft mbB
(86) International application number: PCT/CN2023/120514
(87) International publication number: WO 2025/060012

(57) **Abstract**

The present disclosure relates to an information processing method, a device, and a storage medium. The method comprises: receiving first information via a radio bearer of a first type, the first information being used for instructing a terminal device to determine an artificial intelligence (AI) model; and receiving second information via a radio bearer of a second type, the second information being used for instructing the terminal device to determine a radio resource control (RRC) configuration. In the method, different information is received via different types of radio bearers, thus preventing conflicts between AI model transmission and RRC configuration transmission, and improving communication reliability.

## Description

### TECHNICAL FIELD

The present disclosure relates to the field of communication technologies, and in particular relates to an information processing method, a device, and a storage medium.

### BACKGROUND

With the progress of communication technologies, an artificial intelligence (Artificial Intelligence, AI) model is introduced into a communication system. Through the AI model, events can be predicted, and relatively accurate prediction results can be obtained.

### SUMMARY

Embodiments of the present disclosure provide an information processing method, a device, and a storage medium.

According to a first aspect of the embodiments of the present disclosure, an information processing method is provided, and the method includes:
receiving first information through a first type of radio bearer, wherein the first information is used to indicate a terminal device to determine an artificial intelligence (AI) model; and
receiving second information through a second type of radio bearer, wherein the second information is used to indicate the terminal device to determine a radio resource control (RRC) configuration.

According to a second aspect of the embodiments of the present disclosure, an information processing method is provided, and the method includes:
sending first information through a first type of radio bearer, wherein the first information is used to indicate a terminal device to determine an artificial intelligence (AI) model; and
sending second information through a second type of radio bearer, wherein the second information is used to indicate the terminal device to determine a radio resource control (RRC) configuration.

According to a third aspect of the embodiments of the present disclosure, a terminal device is provided, including:
a transceiver module, configured to receive first information through a first type of radio bearer, wherein the first information is used to indicate a terminal device to determine an artificial intelligence (AI) model; and receive second information through a second type of radio bearer, wherein the second information is used to indicate the terminal device to determine a radio resource control (RRC) configuration.

According to a fourth aspect of the embodiments of the present disclosure, a network device is provided, including:
a transceiver module, configured to send first information through a first type of radio bearer, wherein the first information is used to indicate a terminal device to determine an artificial intelligence (AI) model; and send second information through a second type of radio bearer, wherein the second information is used to indicate the terminal device to determine a radio resource control (RRC) configuration.

According to a fifth aspect of the embodiments of the present disclosure, a communication device is provided, including: one or more processors; wherein the communication device may be used to execute the optional implementation manners of the first aspect or the second aspect.

According to a sixth aspect of the embodiments of the present disclosure, a storage medium is provided, the storage medium storing instructions, and when the instructions are executed on a communication device, the communication device is caused to execute the method described in the optional implementation manners of the first aspect or the second aspect.

The technical solutions provided by the embodiments of the present disclosure may include the following beneficial effects: receiving first information through a first type of radio bearer, the first information being used to indicate a terminal device to determine an artificial intelligence (AI) model; and receiving second information through a second type of radio bearer, the second information being used to indicate the terminal device to determine a radio resource control (RRC) configuration. In this way, by receiving different information through different types of radio bearers, a conflict between transmission of the AI model and transmission of the RRC configuration can be avoided, and communication reliability is improved.

It should be understood that the foregoing general description and the following detailed description are only exemplary and explanatory, and cannot limit the present disclosure.

### BRIEF DESCRIPTION OF THE DRAWINGS

In order to more clearly illustrate the technical solutions in the embodiments of the present disclosure, the drawings required in the description of the embodiments will be briefly introduced below. The following drawings are only some embodiments of the present disclosure, and do not constitute specific limitations on the protection scope of the present disclosure.
FIG. 1 is a schematic diagram of an architecture of a communication system according to an embodiment of the present disclosure.
FIG. 2 is a schematic flowchart of an information processing method according to an embodiment of the present disclosure.
FIG. 3A is a schematic flowchart of an information processing method according to an embodiment of the present disclosure.
FIG. 3B is a schematic flowchart of an information processing method according to an embodiment of the present disclosure.
FIG. 3C is a schematic flowchart of an information processing method according to an embodiment of the present disclosure.
FIG. 4A is a schematic flowchart of an information processing method according to an embodiment of the present disclosure.
FIG. 4B is a schematic flowchart of an information processing method according to an embodiment of the present disclosure.
FIG. 5 is a schematic flowchart of an information processing method according to an embodiment of the present disclosure.
FIG. 6 is a schematic flowchart of an information processing method according to an embodiment of the present disclosure.
FIG. 7A is a schematic structural diagram of a terminal device according to an embodiment of the present disclosure.
FIG. 7B is a schematic structural diagram of a network device according to an embodiment of the present disclosure.
FIG. 8A is a schematic structural diagram of a communication device according to an embodiment of the present disclosure.
FIG. 8B is a schematic structural diagram of a chip according to an embodiment of the present disclosure.

### DETAILED DESCRIPTION

Embodiments of the present disclosure provide an information processing method, a device, and a storage medium.

In a first aspect, embodiments of the present disclosure provide an information processing method, and the method includes:
receiving first information through a first type of radio bearer, wherein the first information is used to indicate a terminal device to determine an artificial intelligence (AI) model;
receiving second information through a second type of radio bearer, wherein the second information is used to indicate the terminal device to determine a radio resource control (RRC) configuration.

In the above embodiments, by receiving different information through different types of radio bearers, a conflict between transmission of the AI model and transmission of the RRC configuration can be avoided, and communication reliability is improved.

In combination with some embodiments of the first aspect, in some embodiments, the method further includes:
determining a processing order of the first information and the second information.

In the above embodiments, determining a processing order of information can flexibly ensure timeliness of information processing.

In combination with some embodiments of the first aspect, in some embodiments, determining the processing order of the first information and the second information includes:
taking a first reception order as the processing order, wherein the first reception order is a time sequence in which the terminal device receives the first information or the second information.

In the above embodiments, processing the first information and the second information according to the reception order can realize fairness of information processing.

In combination with some embodiments of the first aspect, in some embodiments, determining the processing order of the first information and the second information includes:
determining the processing order of the first information and the second information according to a type of radio bearer.

In combination with some embodiments of the first aspect, in some embodiments, the method further includes:
processing the first information and/or the second information according to the processing order.

In the above embodiments, processing the first information and the second information according to the type of radio bearer can realize flexible differentiated processing.

In combination with some embodiments of the first aspect, in some embodiments, a processing priority of the second information is higher than that of the first information.

In combination with some embodiments of the first aspect, in some embodiments, processing the first information and/or the second information according to the processing order includes any one of the following:
a reception time of the first information being earlier than a reception time of the second information, when processing of the first information is not finished, processing the second information;
a reception time of the first information being earlier than a reception time of the second information, when processing of the first information is not finished, suspending processing of the first information and first processing the second information.

In the above embodiments, the processing priority of the second information can be improved, and timeliness and reliability of transmission of the RRC configuration are improved.

In combination with some embodiments of the first aspect, in some embodiments, not finishing processing of the first information includes any one of the following:
not finishing decoding of the first information;
not finishing verification of the first information;
not finishing retransmission of the first information;
not finishing an action indicated by the first information.

In the above embodiments, whether processing of the first information is completed can be determined through any one of the above.

In combination with some embodiments of the first aspect, in some embodiments, the second information is a plurality of pieces of second information, and processing the first information and/or the second information according to the processing order includes:
processing the plurality of pieces of second information according to a second reception order, wherein the second reception order is a time sequence in which the terminal device receives the second information.

In combination with some embodiments of the first aspect, in some embodiments, processing the plurality of pieces of second information according to the second reception order includes:
after processing second information received at a first time, processing second information received at a second time, wherein the second time is later than the first time.

In the above embodiments, the second information can be processed sequentially according to the reception order.

In combination with some embodiments of the first aspect, in some embodiments, the first information is a plurality of pieces of first information, and processing the first information and/or the second information according to the processing order includes:
processing the plurality of pieces of first information according to a third reception order, wherein the third reception order is a time sequence in which the terminal device receives the first information.

In combination with some embodiments of the first aspect, in some embodiments, processing the plurality of pieces of first information according to the third reception order includes:
after processing first information received at a third time, processing first information received at a fourth time, wherein the fourth time is later than the third time.

In the above embodiments, the first information can be processed sequentially according to the reception order.

In combination with some embodiments of the first aspect, in some embodiments, a processing priority of the first information is higher than that of the second information.

In combination with some embodiments of the first aspect, in some embodiments, processing the first information and/or the second information according to the processing order includes:
a reception time of the first information being later than a reception time of the second information, when processing of the second information is not finished, processing the first information;
a reception time of the first information being later than a reception time of the second information, when processing of the second information is not finished, suspending processing of the second information and first processing the first information.

In the above embodiments, the processing priority of the first information can be improved, and timeliness of transmission of the AI model is improved.

In combination with some embodiments of the first aspect, in some embodiments, the radio bearer is a signaling radio bearer (SRB).

In combination with some embodiments of the first aspect, in some embodiments, the second type of radio bearer includes at least one of: SRB0, SRB1, SRB2, SRB3 or SRB4.

In combination with some embodiments of the first aspect, in some embodiments, the first type of radio bearer is different from the second type of radio bearer.

In the above embodiments, by transmitting the AI model and the RRC configuration through different SRBs, transmission reliability can be improved.

In combination with some embodiments of the first aspect, in some embodiments, the AI model is used to obtain a model prediction result according to a measurement result of the terminal device.

In the above embodiments, relatively reliable prediction results can be obtained based on the AI model.

In a second aspect, embodiments of the present disclosure provide an information processing method, and the method includes:
sending first information through a first type of radio bearer, wherein the first information is used to indicate a terminal device to determine an artificial intelligence (AI) model; and
sending second information through a second type of radio bearer, wherein the second information is used to indicate the terminal device to determine a radio resource control (RRC) configuration.

In the above embodiments, by receiving different information through different types of radio bearers, a conflict between transmission of the AI model and transmission of the RRC configuration can be avoided, and communication reliability is improved.

In combination with some embodiments of the second aspect, in some embodiments, the radio bearer is a signaling radio bearer (SRB).

In combination with some embodiments of the second aspect, in some embodiments, the second type of radio bearer includes at least one of: SRB0, SRB1, SRB2, SRB3 or SRB4.

In combination with some embodiments of the second aspect, in some embodiments, the first type of radio bearer is different from the second type of radio bearer.

In combination with some embodiments of the second aspect, in some embodiments, the AI model is used to obtain a model prediction result according to a measurement result of the terminal device.

In a third aspect, embodiments of the present disclosure provide an information processing method, and the method includes:
a network device sends first information to a terminal device through a first type of radio bearer, wherein the first information is used to indicate the terminal device to determine an artificial intelligence (AI) model; and
the network device sends second information to the terminal device through a second type of radio bearer, wherein the second information is used to indicate the terminal device to determine a radio resource control (RRC) configuration.

In the above embodiments, by receiving different information through different types of radio bearers, a conflict between transmission of the AI model and transmission of the RRC configuration can be avoided, and communication reliability is improved.

In a fourth aspect, embodiments of the present disclosure provide a terminal device, the terminal device may include at least one of a transceiver module and a processing module; wherein the terminal device may be used to execute the optional implementation manners of the first aspect.

In a fifth aspect, embodiments of the present disclosure provide a network device, the network device may include at least one of a transceiver module and a processing module; wherein the network device may be used to execute the optional implementation manners of the second aspect.

In a sixth aspect, embodiments of the present disclosure provide a communication device, the communication device may include: one or more processors; wherein the communication device may be used to execute the optional implementation manners of the first aspect or the second aspect.

In a seventh aspect, embodiments of the present disclosure provide a communication system, the communication system may include: a terminal device and a network device; wherein the terminal device is configured to execute the method described in the optional implementation manners of the first aspect, and the network device is configured to execute the method described in the optional implementation manners of the second aspect.

In an eighth aspect, embodiments of the present disclosure provide a storage medium, the storage medium storing instructions, and when the instructions are executed on a communication device, the communication device is caused to execute the method described in the optional implementation manners of the first aspect or the second aspect.

In a ninth aspect, embodiments of the present disclosure provide a program product, and when the program product is executed by a communication device, the communication device is caused to execute the method described in the optional implementation manners of the first aspect or the second aspect.

In a tenth aspect, embodiments of the present disclosure provide a computer program, and when the computer program runs on a computer, the computer is caused to execute the method described in the optional implementation manners of the first aspect or the second aspect.

In an eleventh aspect, embodiments of the present disclosure provide a chip or a chip system. The chip or the chip system includes a processing circuit, configured to execute the method described in the optional implementation manners of the first aspect or the second aspect.

It can be understood that the above terminal device, network device, communication device, communication system, storage medium, program product, computer program, chip or chip system may all be used to execute the method provided by the embodiments of the present disclosure. Therefore, the beneficial effects that can be achieved thereby may refer to the beneficial effects in the corresponding method, and details are not described herein again.

Embodiments of the present disclosure provide an information processing method, a device and a storage medium. In some embodiments, terms such as information processing method and communication method may be used interchangeably; terms such as information processing device, communication device and communication apparatus may be used interchangeably; terms such as information processing system and communication system may be used interchangeably.

The embodiments of the present disclosure are not exhaustive, and are only illustrations of some embodiments, and do not constitute specific limitations on the protection scope of the present disclosure. Under the condition that there is no contradiction, each step in one embodiment may be implemented as an independent embodiment, and the steps may be combined arbitrarily. For example, in one embodiment, a solution after removing some steps may also be implemented as an independent embodiment, and the order of the steps in one embodiment may be exchanged arbitrarily. In addition, optional implementation manners in one embodiment may be combined arbitrarily; in addition, embodiments may be combined arbitrarily, for example, some or all steps of different embodiments may be combined arbitrarily, and one embodiment may be combined arbitrarily with optional implementation manners of other embodiments.

In the embodiments of the present disclosure, unless otherwise specified and without logical conflict, the terms and/or descriptions in the embodiments are consistent with each other and may be referenced to each other, and technical features in different embodiments may be combined to form new embodiments according to their inherent logical relationships.

The terms used in the embodiments of the present disclosure are only for the purpose of describing specific embodiments, and are not intended to limit the present disclosure.

In the embodiments of the present disclosure, unless otherwise specified, elements expressed in singular form, such as "a", "an", "the", "said", "above", "aforementioned", "this", etc., may represent "one and only one", and may also represent "one or more", "at least one", etc. For example, in a case where articles such as "a", "an", "the" are used in English in translation, the noun following the article may be understood as a singular expression form, and may also be understood as a plural expression form.

In some embodiments, "a plurality of" may refer to two or more.

In some embodiments, "at least one of", "one or more", "a plurality of", "multiple" and other terms may be used interchangeably.

In some embodiments, expressions such as "at least one of A and B", "A and/or B", "in one case A, in another case B", "in response to one case A, in response to another case B" may, according to circumstances, include the following technical solutions: in some embodiments A (executing A regardless of B); in some embodiments B (executing B regardless of A); in some embodiments selecting from A and B for execution (A and B are selectively executed); in some embodiments A and B (both A and B are executed). When there are more branches such as A, B, C, etc., it is similar to the above.

In some embodiments, expressions such as "A or B" may, according to circumstances, include the following technical solutions: in some embodiments A (executing A regardless of B); in some embodiments B (executing B regardless of A); in some embodiments selecting from A and B for execution (A and B are selectively executed). When there are more branches such as A, B, C, etc., it is similar to the above.

The prefix words such as "first", "second" in the embodiments of the present disclosure are only for distinguishing different described objects, and do not constitute limitations on positions, sequences, priorities, quantities or contents of the described objects. Statements of the described objects refer to the description in the claims or the embodiments. Additional limitations should not be construed due to the use of prefix words. For example, when the described object is a "field", the ordinal numbers before "field" in "first field" and "second field" do not limit the position or sequence between the fields, and "first" and "second" do not limit whether the modified "field" is in the same message, nor do they limit the sequence of "first field" and "second field". For another example, when the described object is a "level", the ordinal numbers before "level" in "first level" and "second level" do not limit the priority between the levels. For another example, the quantity of the described object is not limited by the ordinal number, and may be one or more. Taking "first device" as an example, the quantity of "device" may be one or more. In addition, objects modified by different prefix words may be the same or different. For example, when the described object is a "device", "first device" and "second device" may be the same device or different devices, and their types may be the same or different. For another example, when the described object is "information", "first information" and "second information" may be the same information or different information, and their contents may be the same or different.

In some embodiments, "including A", "comprising A", "used to indicate A", "carrying A" may be interpreted as directly carrying A, and may also be interpreted as indirectly indicating A.

In some embodiments, terms such as "in response to...", "in response to determining...", "in a case of...", "when...", "while...", "if...", "assuming..." may be used interchangeably.

In some embodiments, terms such as "greater than", "greater than or equal to", "not less than", "more than", "more than or equal to", "no less than", "higher than", "higher than or equal to", "not lower than", "above" may be used interchangeably; terms such as "less than", "less than or equal to", "not greater than", "fewer than", "fewer than or equal to", "no more than", "lower than", "lower than or equal to", "not higher than", "below" may be used interchangeably.

In some embodiments, apparatus and the like may be interpreted as physical entities or may be interpreted as virtual entities, and their names are not limited to the names described in the embodiments. Terms such as "apparatus", "equipment", "device", "circuit", "network element", "node", "function", "unit", "section", "system", "network", "chip", "chip system", "entity", "body" may be used interchangeably.

In some embodiments, "network" may be interpreted as devices included in the network (for example, network device, access network device, core network device, etc.).

In some embodiments, the network device may include at least one of an access network device and a core network device.

In some embodiments, terms such as "Access Network Device (AN Device)", "Radio Access Network Device (RAN Device)", "Base Station (BS)", "Radio Base Station", "Fixed Station", "Node", "Access Point", "Transmission Point (TP)", "Reception Point (RP)", "Transmission/Reception Point (TRP)", "Panel", "Antenna Panel", "Antenna Array", "Cell", "Macro Cell", "Small Cell", "Femto Cell", "Pico Cell", "Sector", "Cell Group", "Serving Cell", "Carrier", "Component Carrier", "Bandwidth Part (BWP)" may be used interchangeably.

In some embodiments, terms such as "Terminal", "Terminal Device", "Terminal Side Device", "User Equipment (UE)", "User Terminal", "Mobile Station (MS)", "Mobile Terminal (MT)", "Subscriber Station", "Mobile Unit", "Subscriber Unit", "Wireless Unit", "Remote Unit", "Mobile Device", "Wireless Device", "Wireless Communication Device", "Remote Device", "Mobile Subscriber Station", "Access Terminal", "Mobile Terminal", "Wireless Terminal", "Remote Terminal", "Handset", "User Agent", "Mobile Client", "Client" may be used interchangeably.

In some embodiments, the access network device, the core network device, or the network device may be replaced with a terminal device. For example, for a structure in which communication between a terminal device and an access network device, a core network device, or a network device is replaced with communication between a plurality of terminal devices (for example, device-to-device (D2D), vehicle-to-everything (V2X), etc.) the embodiments of the present disclosure may also be applied. In this case, a structure in which the terminal device has all or part of functions of the access network device may also be provided. In addition, terms such as "uplink" and "downlink" may also be replaced with terms corresponding to communication between terminal devices (for example, "side"). For example, an uplink channel and a downlink channel may be replaced with a sidelink channel or a direct link channel, and an uplink link and a downlink link may be replaced with a sidelink link or a direct link link.

In some embodiments, the terminal device may be replaced with an access network device, core network device, or network device. In this case, a structure in which the access network device, core network device, or network device has all or part of functions of the terminal device may also be provided.

In some embodiments, acquisition of data, information, etc. may comply with laws and regulations of the country where located.

In some embodiments, data, information, etc. may be acquired after obtaining user consent.

In addition, each element, each row, or each column in the tables in the embodiments of the present disclosure may be implemented as an independent embodiment, and any combination of any element, any row, and any column may also be implemented as an independent embodiment.

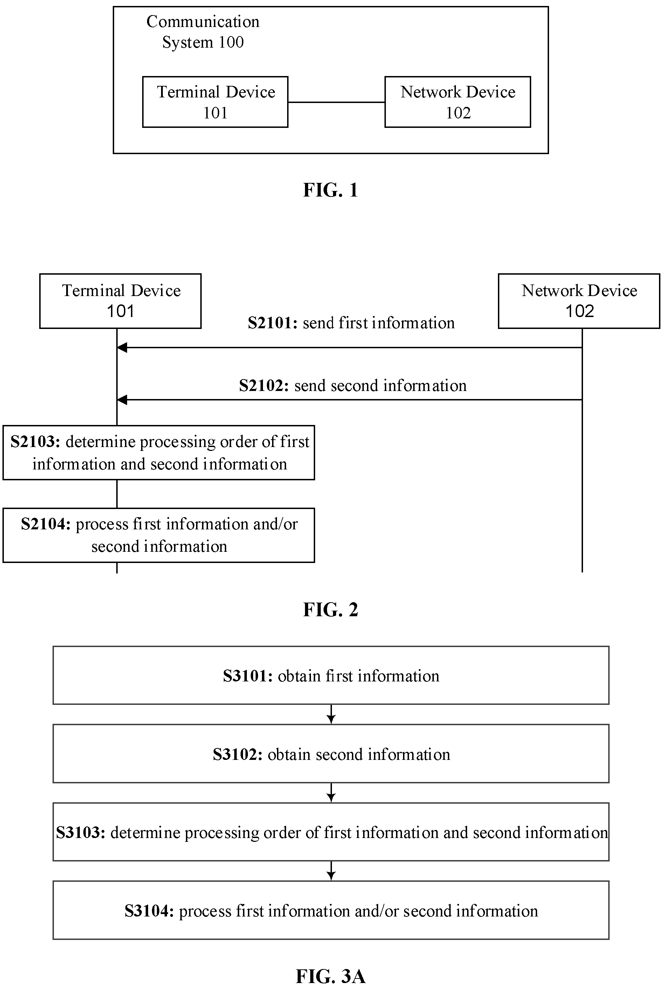

FIG. 1 is a schematic diagram of an architecture of a communication system according to an embodiment of the present disclosure. As shown in FIG. 1, the communication system 100 may include a terminal device 101 and a network device 102.

In some embodiments, the terminal device 101 may include at least one of a mobile phone, a wearable device, an internet of things device, a vehicle with communication capability, a smart vehicle, a tablet computer (Pad), a computer with wireless transceiving capability, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, but is not limited thereto.

In some embodiments, the network device 102 may include at least one of an access network device and a core network device.

In some embodiments, the access network device may be a node or device that connects a terminal device to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an Open RAN, a Cloud RAN, a base station in other communication systems, and an access node in a Wi-Fi system, but is not limited thereto.

In some embodiments, the technical solutions of the present disclosure may be applicable to an Open RAN architecture. In this case, interfaces between access network devices or within an access network device involved in the embodiments of the present disclosure may become internal interfaces of Open RAN, and processes and information interaction between these internal interfaces may be implemented by software or programs.

In some embodiments, the access network device may include a central unit (CU) and a distributed unit (DU). The CU may also be referred to as a control unit. By adopting a CU-DU structure, protocol layers of the access network device may be split, functions of some protocol layers may be placed in the CU for centralized control, and remaining part or all protocol layer functions may be distributed in the DU, and the DU may be centrally controlled by the CU, but is not limited thereto.

In some embodiments, the core network device may be one device, or may be multiple devices or a device group. The core network may include at least one of an evolved packet core (EPC), a 5G core network (5GCN), and a next generation core (NGC).

It can be understood that the communication system described in the embodiments of the present disclosure is for more clearly illustrating the technical solutions of the embodiments of the present disclosure, and does not constitute a limitation on the technical solutions proposed in the embodiments of the present disclosure. Those skilled in the art can understand that with evolution of system architecture and emergence of new service scenarios, the technical solutions proposed in the embodiments of the present disclosure are also applicable to similar technical problems.

The following embodiments of the present disclosure may be applied to the communication system 100 shown in FIG. 1 or some entities thereof, but are not limited thereto. The entities shown in FIG. 1 are examples. The communication system may include all or part of the entities in FIG. 1, and may also include other entities other than FIG. 1. The number and forms of the entities are arbitrary. The entities may be physical or virtual. The connection relationships between the entities are examples. The entities may be unconnected or connected. The connection may be in any manner, may be direct connection or indirect connection, may be wired connection or wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New Radio Access (NX), Future generation radio access (FX), Global System for Mobile communications (GSM^{®}), CDMA2000, Ultra Mobile Broadband (UMB), IEEE 802.11 (Wi-Fi^{®}), IEEE 802.16 (WiMAX^{®}), IEEE 802.20, Ultra-WideBand (UWB), Bluetooth^{®}, Public Land Mobile Network (PLMN) network, Device-to-Device (D2D) system, Machine to Machine (M2M) system, Internet of Things (IoT) system, Vehicle-to-Everything (V2X), systems using other communication methods, and next generation systems extended based on them. In addition, multiple systems may also be combined for application (for example, combination of LTE or LTE-A with 5G, etc.).

In some embodiments of the present disclosure, the network device and the terminal device in the communication system may establish a signaling radio bearer (SRB). The SRB may be used to transmit control signaling. The control signaling may be a radio resource control (RRC) message or other control message. One SRB may correspond to one logical channel.

In one implementation, the SRBs established by the network device and the terminal device may include SRB0, SRB1, SRB2, SRB3 and SRB4. SRB0 may be used to transmit RRC messages of a Common Control Channel (CCCH) logical channel; SRB1 may be used to transmit RRC messages of a Dedicated Control Channel (DCCH) logical channel. Optionally, SRB1 may transmit Non-Access Stratum (NAS) messages before SRB2 is established; SRB2 may be used to transmit NAS messages and RRC messages carrying stored measurement results; SRB3 may be used to transmit RRC messages corresponding to a Secondary Cell Group (SCG); SRB4 may be used to transmit RRC messages for reporting application layer measurement results.

In some embodiments, RRC messages are used to transmit RRC configuration. The network device may send multiple RRC messages to the terminal device. One RRC message may be divided and transmitted in multiple segments. The terminal device may process received RRC messages sequentially. For example, when one RRC message is received, after processing this RRC message, the next received RRC message can be processed. It should be noted that processing complete of an RRC message may mean successfully decoding the RRC message or completing retransmission of the RRC message.

With progress of communication technologies, an AI model is introduced into a communication system. Through the AI model, events may be predicted, and relatively accurate prediction results may be obtained. It should be noted that the name of the AI model in the embodiments of the present disclosure is not limited. For example, it may be a machine learning (ML) model or any trained model. A machine learning algorithm is currently one of the most important implementation methods of artificial intelligence technologies. Machine learning may obtain a model through a large amount of training data, and events may be predicted through the model. In many fields, a model obtained through machine learning training can obtain very accurate prediction results.

The terminal device and/or the network device may use an AI model for prediction and reasoning, to improve system performance. For example, in a beam management process, the terminal device may reduce the number of beams to be measured, and the optimal beam may be obtained through AI reasoning by the terminal device or the network device. In a Channel State Information (CSI) reporting process, the terminal device may compress CSI measurement results through an AI model, and report compressed CSI measurement results to the network device. After receiving, the network device may restore original CSI measurement results through the AI model, thereby reducing signaling bits required in the reporting process.

In some embodiments, during use and reasoning of the AI model, multiple AI models or AI functions may be required for reasoning and prediction. The data volume of the AI model may be large. For example, it may reach hundreds of megabytes.

In some embodiments, RRC messages may be used to transmit the AI model. Since the data volume of the AI model is large, the RRC message used to transmit the AI model may be divided into many segments, and processing time may be relatively long. Thus, a message carrying other RRC configuration needs to wait until the RRC message carrying the AI model is processed before being processed, which may cause delay of other RRC configuration.

FIG. 2 is a schematic flowchart of an information processing method according to an embodiment of the present disclosure. The method may be performed by the above communication system. As shown in FIG. 2, the method may include:
**Step S2101:** a network device sends first information to a terminal device.

In some embodiments, the terminal device may receive the first information. For example, the terminal device may receive the first information sent by the network device. For another example, the terminal device may also receive the first information sent by other entities.

In some embodiments, the network device may send the first information through a first type of radio bearer. Similarly, the terminal device may also receive the first information through the first type of radio bearer.

In one implementation, the first type may be any preset bearer type, for example, a signaling radio bearer (SRB) or a data radio bearer (DRB). Optionally, the radio bearer of the first type is a first SRB. The first SRB may be any one of SRB0, SRB1, SRB2, SRB3 and SRB4, or the first SRB is not any one of SRB0, SRB1, SRB2, SRB3 and SRB4.

In some embodiments, the first information may be used to indicate the terminal device to determine an artificial intelligence (AI) model.

In some embodiments, the first information may be an RRC message carrying an AI model. For example, the first information may carry a model file of the AI model, and the model file may include executable programs of the AI model, model configuration and other information.

In some embodiments, the first information may be any signaling or data carrying an AI model.

In some embodiments, the name of the first information is not limited, for example, it may be "RRC message carrying an AI model", "signaling or data carrying an AI model", "AI model information", etc.

In some embodiments, the terminal device may determine the AI model according to the first information. For example, the terminal device may process the first information to obtain the AI model.

Optionally, the AI model is used to obtain a model prediction result according to a measurement result of the terminal device. For example, the AI model may be the AI model used in the beam management process or CSI reporting process in the foregoing embodiments of the present disclosure, or may be any model that can be used by the terminal device.

**Step S2102:** the network device sends second information to the terminal device.

In some embodiments, the terminal device may receive the second information. For example, the terminal device may receive the second information sent by the network device. For another example, the terminal device may also receive the second information sent by other entities.

In some embodiments, the network device may send the second information through a second type of radio bearer. Similarly, the terminal device may receive the second information through the second type of radio bearer.

It should be noted that the second type and the first type may be the same or different.

In some embodiments, the radio bearer is a signaling radio bearer (SRB). For example, both the radio bearer of the first type and the radio bearer of the second type are SRBs.

It should be noted that the radio bearer of the first type may be multiple, and similarly, the radio bearer of the second type may also be multiple.

In some embodiments, the radio bearer of the second type may include at least one of: SRB0, SRB1, SRB2, SRB3 or SRB4.

Optionally, the radio bearer of the second type may include SRB0, SRB1, SRB2, SRB3 and SRB4.

In some embodiments, the first type and the second type are different, that is, the radio bearer of the first type is different from the radio bearer of the second type. For example, the radio bearer of the first type is an SRB other than the second type. The radio bearer of the first type may be a newly defined SRB, for example, SRB5.

In one implementation, the radio bearer of the second type may include SRB0, SRB1, SRB2 and SRB3, and the radio bearer of the first type may be SRB4.

In another implementation, the radio bearer of the second type may include SRB0, SRB1 and SRB2, and the radio bearer of the first type may include SRB3 and/or SRB4.

In other embodiments, the radio bearer of the first type may be a DRB, and the radio bearer of the second type may be an SRB.

In some embodiments, the second information may be used to indicate the terminal device to determine a radio resource control (RRC) configuration.

In some embodiments, the second information may be an RRC message carrying RRC configuration.

In some embodiments, the second information may be an RRC message carrying third information, and the third information may be other information other than the AI model.

In some embodiments, the name of the second information is not limited, for example, it may be "RRC configuration information", "RRC message carrying RRC configuration", "RRC message not carrying an AI model", "signaling or data carrying RRC configuration", "signaling or data not carrying an AI model", etc.

**Step S2103:** the terminal device determines a processing order of the first information and the second information.

In some embodiments, a first reception order may be taken as the processing order. The first reception order is a time sequence in which the terminal device receives the first information or the second information.

For example, if a reception time of the first information is earlier than a reception time of the second information, then according to the reception order, after processing the first information, the second information is processed.

For another example, if a reception time of the first information is later than a reception time of the second information, then according to the reception order, after processing the second information, the first information is processed.

In other embodiments, the processing order of the first information and the second information may be determined according to a type of radio bearer.

For example, the radio bearer of the second type may have priority over the radio bearer of the first type, that is, a processing priority of the second information is higher than that of the first information.

For another example, the radio bearer of the first type may have priority over the radio bearer of the second type, that is, a processing priority of the first information is higher than that of the second information.

In some embodiments, the terminal device may process the first information and the second information in sequence, for example, according to the reception order of the first information and the second information.

In other embodiments, the terminal device may not process the first information and the second information in sequence. For example, the processing order of the first information and the second information may be determined according to a type of radio bearer.

**Step S2104:** the terminal device processes the first information and/or the second information.

For example, the first information and/or the second information may be processed according to the above processing order.

In some embodiments, the second information may be processed first, and after processing the second information, the first information is processed.

In some embodiments, when the first information has not been completely processed and new second information is received, the second information may be processed first.

In some embodiments, if a reception time of the first information is earlier than a reception time of the second information, and the first information has not been completely processed, the second information may be processed.

In some embodiments, if a reception time of the first information is earlier than a reception time of the second information, and the first information has not been completely processed, processing of the first information is suspended, and the second information is processed first.

It should be noted that the above not completely processing the first information may include any one of the following:
not finishing decoding of the first information;
not finishing verification of the first information;
not finishing retransmission of the first information;
not finishing an action indicated by the first information.

For example, the terminal device first receives the first information from the radio bearer of the first type. During processing of the first information, the terminal device receives the second information from the radio bearer of the second type, and before processing of the first information is completed, the second information may be processed first.

In this way, the second information (RRC configuration) may be processed first, to avoid delay of RRC configuration caused by transmission of the AI model, and improve communication reliability.

In some embodiments of the present disclosure, a processing priority of the second information may be higher than that of the first information. In a case where the processing priority of the second information is higher than that of the first information, the second information may be processed first. For example, if a reception time of the first information is earlier than a reception time of the second information, and the first information has not been completely processed, the second information may be processed. For another example, if a reception time of the first information is earlier than a reception time of the second information, and the first information has not been completely processed, processing of the first information may be suspended, and the second information is processed first.

In some embodiments, the second information may be multiple pieces, and the multiple pieces of second information may be processed according to a second reception order. The second reception order is a time sequence in which the terminal device receives the second information.

For example, after processing second information received at a first time, second information received at a second time is processed. The second time is later than the first time.

In some embodiments, the first information may be multiple pieces, and the multiple pieces of first information may be processed according to a third reception order. The third reception order is a time sequence in which the terminal device receives the first information.

For example, after processing first information received at a third time, first information received at a fourth time is processed. The fourth time is later than the third time.

In some embodiments, the first information may be processed first, and after processing the first information, the second information is processed.

In some embodiments, when the second information has not been completely processed and new first information is received, the first information may be processed first.

In some embodiments, if a reception time of the first information is later than a reception time of the second information, and the second information has not been completely processed, the first information may be processed.

In some embodiments, if a reception time of the first information is later than a reception time of the second information, and the second information has not been completely processed, processing of the second information may be suspended, and the first information is processed first.

For example, the terminal device first receives the second information from the radio bearer of the second type. During processing of the second information, the terminal device receives the first information from the radio bearer of the first type, and before processing of the second information is completed, the first information may be processed first.

In this way, the first information (AI model) may be processed first, thereby improving timeliness and reliability of transmission of the AI model.

In other embodiments of the present disclosure, a processing priority of the first information may be higher than that of the second information. In a case where the processing priority of the first information is higher than that of the second information, the first information may be processed first. For example, if a reception time of the first information is later than a reception time of the second information, and the second information has not been completely processed, the first information may be processed. For another example, if a reception time of the first information is later than a reception time of the second information, and the second information has not been completely processed, processing of the second information may be suspended, and the first information is processed first.

In other embodiments of the present disclosure, priority of the first information and the second information may not be considered. For example, the first information and the second information may be processed in parallel.

The method involved in the embodiments of the present disclosure may include at least one of the above Step S2101 to Step S2104. For example, Step S2103 may be implemented as an independent embodiment, Step S2104 may be implemented as an independent embodiment, Step S2101 + Step S2102 may be implemented as an independent embodiment, Step S2101 + Step S2104 may be implemented as an independent embodiment, Step S2101 + Step S2102 + Step S2103 may be implemented as an independent embodiment, Step S2101 + Step S2102 + Step S2104 may be implemented as an independent embodiment, but is not limited thereto.

In some embodiments, the above Step S2101 to Step S2104 may exchange order or be executed simultaneously. For example, Step S2101 and Step S2102 may exchange order or be executed simultaneously.

In some embodiments, the above Step S2101 to Step S2104 are optional steps. For example, Step S2101, Step S2102, Step S2103 are optional. In different embodiments, one or more of these steps may be omitted or replaced. For another example, Step S2103 and Step S2104 are optional. In different embodiments, one or more of these steps may be omitted or replaced.

In some embodiments, reference may be made to other optional implementation manners described before or after the description corresponding to FIG. 2.

By adopting the above method, first information is received through a first type of radio bearer, the first information being used to indicate a terminal device to determine an artificial intelligence (AI) model; second information is received through a second type of radio bearer, the second information being used to indicate the terminal device to determine a radio resource control (RRC) configuration. In this way, by receiving different information through different types of radio bearers, a conflict between transmission of the AI model and transmission of the RRC configuration can be avoided, and communication reliability is improved.

In some embodiments, names of information and the like are not limited to the names described in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", "chip" may be used interchangeably.

In some embodiments, terms such as "uplink", "uplink link", "physical uplink link" may be used interchangeably; terms such as "downlink", "downlink link", "physical downlink link" may be used interchangeably; terms such as "side", "sidelink", "side communication", "sidelink communication", "direct connection", "direct link", "direct communication", "direct link communication" may be used interchangeably.

In some embodiments, terms such as "Downlink Control Information (DCI)", "downlink (DL) assignment", "DL DCI", "uplink (UL) grant", "UL DCI" may be used interchangeably.

In some embodiments, terms such as "Physical Downlink Shared Channel (PDSCH)", "DL data", "DL signal", "DL message", "downlink data", "downlink signal", "downlink message" may be used interchangeably; terms such as "Physical Uplink Shared Channel (PUSCH)", "UL data", "UL signal", "UL message", "uplink data", "uplink signal", "uplink message" may be used interchangeably.

In some embodiments, terms such as "time", "time point", "moment", "time position" may be used interchangeably; terms such as "duration", "time period", "time window", "window", "time" may be used interchangeably.

In some embodiments, terms such as "obtain", "acquire", "get", "receive", "transmit", "bidirectional transmit", "send and/or receive" may be used interchangeably, and may be interpreted as receiving from other entities, acquiring from a protocol, acquiring from a higher layer, obtaining through self-processing, self-implementing, and other meanings.

In some embodiments, terms such as "send", "transmit", "report", "issue", "transmission", "bidirectional transmission", "send and/or receive" may be used interchangeably.

FIG. 3A is a schematic flowchart of an information processing method according to an embodiment of the present disclosure. As shown in FIG. 3A, the embodiments of the present disclosure relate to an information processing method, and the method may be performed by a terminal device. The method may include:
**Step S3101:** obtaining first information.

Optional implementation manners of Step S3101 may refer to the optional implementation manners of Step S2101 in FIG. 2 and other related parts in the embodiments involved in FIG. 2, and details are not described herein again.

In some embodiments, the terminal device may receive first information sent by a network device, but is not limited thereto. The terminal device may also receive first information sent by other entities.

In some embodiments, the terminal device may obtain first information specified by a protocol.

In some embodiments, the terminal device may obtain first information from upper layer(s).

In some embodiments, the terminal device may perform processing to obtain first information.

In some embodiments, Step S3101 may be omitted. The terminal device may autonomously implement functions indicated by the first information, or the above functions may be default.

**Step S3102:** obtaining second information.

Optional implementation manners of Step S3102 may refer to the optional implementation manners of Step S2102 in FIG. 2 and other related parts in the embodiments involved in FIG. 2, and details are not described herein again.

In some embodiments, the terminal device may receive second information sent by a network device, but is not limited thereto. The terminal device may also receive second information sent by other entities.

In some embodiments, the terminal device may obtain second information specified by a protocol.

In some embodiments, the terminal device may obtain second information from upper layer(s).

In some embodiments, the terminal device may perform processing to obtain second information.

In some embodiments, Step S3102 may be omitted. The terminal device may autonomously implement functions indicated by the second information, or the above functions may be default.

**Step S3103:** determining a processing order of the first information and the second information.

Optional implementation manners of Step S3103 may refer to the optional implementation manners of Step S2103 in FIG. 2 and other related parts in the embodiments involved in FIG. 2, and details are not described herein again.

**Step S3104:** processing the first information and/or the second information.

Optional implementation manners of Step S3104 may refer to the optional implementation manners of Step S2104 in FIG. 2 and other related parts in the embodiments involved in FIG. 2, and details are not described herein again.

The method involved in the embodiments of the present disclosure may include at least one of Step S3101 to Step S3104. For example, Step S3103 may be implemented as an independent embodiment, Step S3104 may be implemented as an independent embodiment, Step S3101 + Step S3102 may be implemented as an independent embodiment, Step S3101 + Step S3104 may be implemented as an independent embodiment, Step S3101 + Step S3102 + Step S3103 may be implemented as an independent embodiment, Step S3101 + Step S3102 + Step S3104 may be implemented as an independent embodiment, but is not limited thereto.

In some embodiments, the above Step S3101 to Step S3104 may exchange order or be executed simultaneously. For example, Step S3101 and Step S3102 may exchange order or be executed simultaneously.

In some embodiments, the above Step S3101 to Step S3104 are optional steps. For example, Step S3101, Step S3102, and Step S3103 are optional. In different embodiments, one or more of these steps may be omitted or replaced. For another example, Step S3103 and Step S3104 are optional. In different embodiments, one or more of these steps may be omitted or replaced.

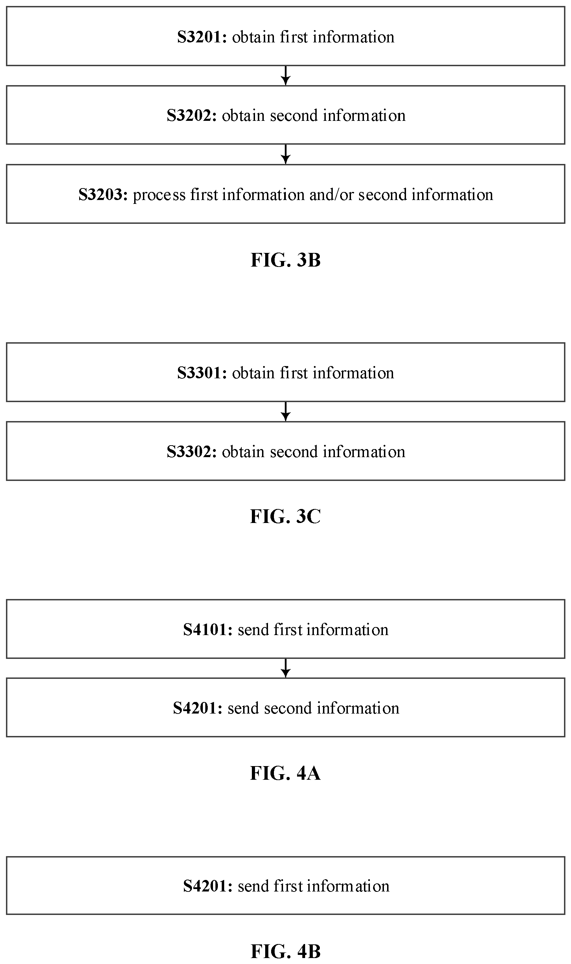

FIG. 3B is a schematic flowchart of an information processing method according to an embodiment of the present disclosure. As shown in FIG. 3B, the embodiments of the present disclosure relate to an information processing method, and the method may be performed by a terminal device. The method may include:

**Step S3201:** obtaining first information.

Optional implementation manners of Step S3201 may refer to the optional implementation manners of Step S2101 in FIG. 2, Step S3101 in FIG. 3A, and other related parts in the embodiments involved in FIG. 2 and FIG. 3A, and details are not described herein again.

**Step S3202:** obtaining second information.

Optional implementation manners of Step S3202 may refer to the optional implementation manners of Step S2102 in FIG. 2, Step S3102 in FIG. 3A, and other related parts in the embodiments involved in FIG. 2 and FIG. 3A, and details are not described herein again.

**Step S3203:** processing the first information and/or the second information.

Optional implementation manners of Step S3203 may refer to the optional implementation manners of Step S2103 in FIG. 2, Step S3103 in FIG. 3A, and other related parts in the embodiments involved in FIG. 2 and FIG. 3A, and details are not described herein again.

In some embodiments, the above steps are optional steps.

FIG. 3C is a schematic flowchart of an information processing method according to an embodiment of the present disclosure. As shown in FIG. 3C, the embodiments of the present disclosure relate to an information processing method, and the method may be performed by a terminal device. The method may include:
**Step S3301:** obtaining first information.

Optional implementation manners of Step S3301 may refer to the optional implementation manners of Step S2101 in FIG. 2, Step S3101 in FIG. 3A, and other related parts in the embodiments involved in FIG. 2 and FIG. 3A, and details are not described herein again.

**Step S3302:** obtaining second information.

Optional implementation manners of Step S3302 may refer to the optional implementation manners of Step S2102 in FIG. 2, Step S3102 in FIG. 3A, and other related parts in the embodiments involved in FIG. 2 and FIG. 3A, and details are not described herein again.

In some embodiments, the above steps are optional steps.

In some embodiments, the first information is used to indicate a terminal device to determine an artificial intelligence (AI) model; the second information is used to indicate the terminal device to determine a radio resource control (RRC) configuration.

In some embodiments, the method further includes:
determining a processing order of the first information and the second information.

In some embodiments, determining the processing order of the first information and the second information includes:
taking a first reception order as the processing order, wherein the first reception order is a time sequence in which the terminal device receives the first information or the second information.

In some embodiments, determining the processing order of the first information and the second information includes:
determining the processing order of the first information and the second information according to a type of radio bearer.

In some embodiments, the method further includes:
processing the first information and/or the second information according to the processing order.

In combination with some embodiments of the first aspect, in some embodiments, a processing priority of the second information is higher than that of the first information.

In some embodiments, processing the first information and/or the second information according to the processing order includes any one of the following:
when a reception time of the first information is earlier than a reception time of the second information, when processing of the first information is not finished, processing the second information;
when a reception time of the first information is earlier than a reception time of the second information, when processing of the first information is not finished, suspending processing of the first information and first processing the second information.

In some embodiments, not finishing processing of the first information includes any one of the following:
not finishing decoding of the first information;
not finishing verification of the first information;
not finishing retransmission of the first information;
not finishing an action indicated by the first information.

In some embodiments, the second information is a plurality of pieces, and processing the first information and/or the second information according to the processing order includes:
processing the plurality of pieces of second information according to a second reception order, wherein the second reception order is a time sequence in which the terminal device receives the second information.

In some embodiments, processing the plurality of pieces of second information according to the second reception order includes:
after processing second information received at a first time, processing second information received at a second time, wherein the second time is later than the first time.

In some embodiments, the first information is a plurality of pieces, and processing the first information and/or the second information according to the processing order includes:
processing the plurality of pieces of first information according to a third reception order, wherein the third reception order is a time sequence in which the terminal device receives the first information.

In some embodiments, processing the plurality of pieces of first information according to the third reception order includes:
after processing first information received at a third time, processing first information received at a fourth time, wherein the fourth time is later than the third time.

In combination with some embodiments of the first aspect, in some embodiments, a processing priority of the first information is higher than that of the second information.

In some embodiments, processing the first information and/or the second information according to the processing order includes:
when a reception time of the first information is later than a reception time of the second information, when processing of the second information is not finished, processing the first information;
when a reception time of the first information is later than a reception time of the second information, when processing of the second information is not finished, suspending processing of the second information and first processing the first information.

In some embodiments, the radio bearer is a signaling radio bearer (SRB).

In some embodiments, the second type of radio bearer includes at least one of: SRB0, SRB1, SRB2, SRB3 or SRB4.

In some embodiments, the first type of radio bearer is different from the second type of radio bearer.

In some embodiments, the AI model is used to obtain a model prediction result according to a measurement result of the terminal device.

FIG. 4A is a schematic flowchart of an information processing method according to an embodiment of the present disclosure. As shown in FIG. 4A, the embodiments of the present disclosure relate to an information processing method, and the method may be performed by a network device. The method includes:
**Step S4101:** sending first information.

Optional implementation manners of Step S4101 may refer to the optional implementation manners of Step S2101 in FIG. 2 and other related parts in the embodiments involved in FIG. 2, and details are not described herein again.

In some embodiments, the network device may send the first information to a terminal device, but is not limited thereto. The network device may also send the first information to other entities.

**Step S4201:** sending second information.

Optional implementation manners of Step S4201 may refer to the optional implementation manners of Step S2102 in FIG. 2 and other related parts in the embodiments involved in FIG. 2, and details are not described herein again.

In some embodiments, the network device may send the second information to a terminal device, but is not limited thereto. The network device may also send the second information to other entities.

In some embodiments, the above steps are optional steps.

In some embodiments, the first information is used to indicate a terminal device to determine an artificial intelligence (AI) model; the second information is used to indicate the terminal device to determine a radio resource control (RRC) configuration.

In some embodiments, the radio bearer is a signaling radio bearer (SRB).

In some embodiments, the second type of radio bearer includes at least one of: SRB0, SRB1, SRB2, SRB3 or SRB4.

In some embodiments, the first type of radio bearer is different from the second type of radio bearer.

In some embodiments, the AI model is used to obtain a model prediction result according to a measurement result of the terminal device.

FIG. 4B is a schematic flowchart of an information processing method according to an embodiment of the present disclosure. As shown in FIG. 4B, the embodiments of the present disclosure relate to an information processing method, and the method may be performed by a network device. The method may include:
**Step S4201:** sending first information.

Optional implementation manners of Step S4201 may refer to the optional implementation manners of Step S2101 in FIG. 2, Step S4101 in FIG. 4A, and other related parts in the embodiments involved in FIG. 2 and FIG. 4A, and details are not described herein again.

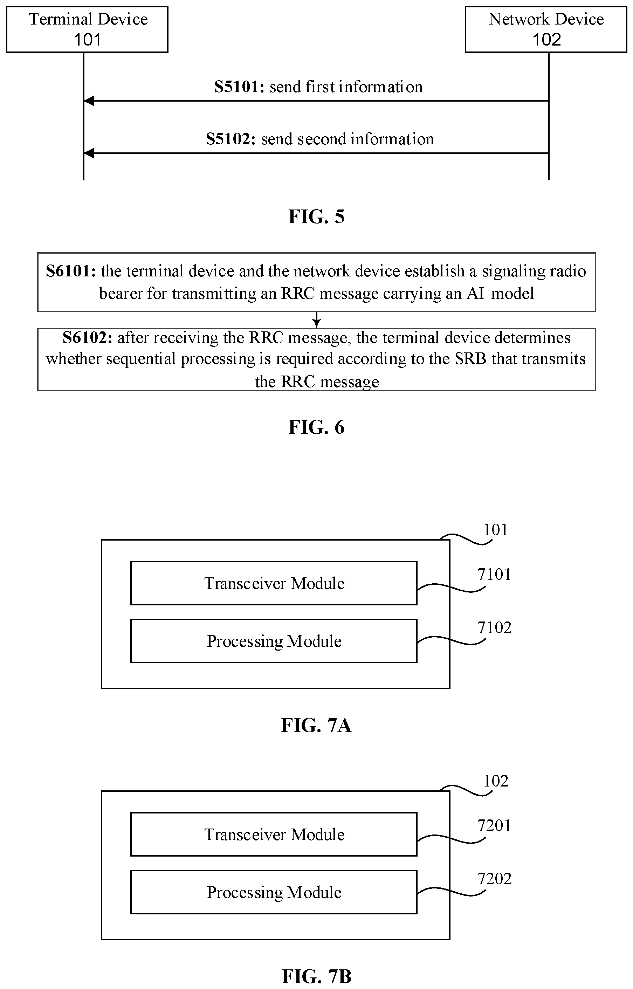

FIG. 5 is a schematic flowchart of an information processing method according to an embodiment of the present disclosure. As shown in FIG. 5, the embodiments of the present disclosure relate to an information processing method, and the method may include:
**Step S5101:** a network device sends first information to a terminal device.

Optional implementation manners of Step S5101 may refer to the optional implementation manners of Step S2101 in FIG. 2, Step S3101 in FIG. 3A, Step S4101 in FIG. 4A, and other related parts in the embodiments involved in FIG. 2, FIG. 3A or FIG. 4A, and details are not described herein again.

**Step S5102:** a network device sends second information to a terminal device.

Optional implementation manners of Step S5102 may refer to the optional implementation manners of Step S2102 in FIG. 2, Step S3102 in FIG. 3A, Step S4102 in FIG. 4A, and other related parts in the embodiments involved in FIG. 2, FIG. 3A or FIG. 4A, and details are not described herein again.

In some embodiments, the above method may include the methods described in the embodiments of the communication system, terminal device, network device, etc., and details are not described herein again.

FIG. 6 is a schematic flowchart of an information processing method according to an embodiment of the present disclosure. As shown in FIG. 6, the embodiments of the present disclosure relate to an information processing method, and the method may be performed by a communication system. The method may include:

**Step S6101:** the terminal device and the network device establish a signaling radio bearer for transmitting an RRC message carrying an AI model.

In some embodiments, the signaling radio bearer (SRB) may be one or more, and the SRB does not belong to any one of SRB0-4.

**Step S6102:** after receiving the RRC message, the terminal device determines whether sequential processing is required according to the SRB that transmits the RRC message.

In some embodiments, if the RRC message is not from the SRB, the RRC message can be processed only after processing the previous received RRC message that is not from the SRB.

Optionally, after receiving an RRC message from SRB0-4, the terminal device may process the RRC message before processing of the RRC message from the SRB is completed.

In other embodiments, if the RRC message is from the SRB, the RRC message can be processed only after processing the previous received RRC message from the SRB.

Optionally, after receiving an RRC message from the SRB, the terminal device may process the RRC message before processing of the RRC message from SRB0-4 is completed.

In some embodiments of the present disclosure, a communication system is provided. The communication system may include a terminal device and a network device. The terminal device may execute the information processing method executed by the terminal device in the foregoing embodiments of the present disclosure; the network device may execute the information processing method executed by the network device in the foregoing embodiments of the present disclosure.

The embodiments of the present disclosure further provide an apparatus for implementing any of the above methods. For example, an apparatus is provided, the apparatus including units or modules for implementing respective steps executed by the terminal device in any of the above methods. For another example, another apparatus is provided, including units or modules for implementing respective steps executed by the network device (for example, an access network device, a core network function node, a core network device, etc.) in any of the above methods.

It should be understood that division of the units or modules in the above apparatus is only a logical function division. In actual implementation, they may be wholly or partially integrated into one physical entity, or may be physically separated. In addition, units or modules in the apparatus may be implemented in a form of a processor invoking software. For example, the apparatus includes a processor, the processor is connected to a memory, the memory stores instructions, and the processor invokes the instructions stored in the memory to implement any of the above methods or implement functions of respective units or modules of the above apparatus. The processor may be, for example, a general processor, such as a Central Processing Unit (CPU) or a microprocessor. The memory may be a memory inside the apparatus or a memory outside the apparatus. Alternatively, units or modules in the apparatus may be implemented in a form of hardware circuits. Functions of part or all of the units or modules may be implemented through design of hardware circuits. The above hardware circuits may be understood as one or more processors. For example, in one implementation, the above hardware circuit is an Application-Specific Integrated Circuit (ASIC). Through design of logical relationships of elements in the circuit, part or all functions of the units or modules are implemented. For another example, in another implementation, the above hardware circuit is implemented by a Programmable Logic Device (PLD). Taking a Field Programmable Gate Array (FPGA) as an example, it may include a large number of logic gate circuits. Connection relationships between the logic gate circuits are configured through a configuration file, thereby implementing part or all functions of the units or modules. All units or modules of the above apparatus may be implemented entirely by a processor invoking software, or entirely by hardware circuits, or partially by a processor invoking software and remaining parts by hardware circuits.

In the embodiments of the present disclosure, a processor is a circuit having signal processing capability. In one implementation, the processor may be a circuit having instruction reading and running capability, such as a Central Processing Unit (CPU), a microprocessor, a Graphics Processing Unit (GPU) (which may be understood as a microprocessor), or a Digital Signal Processor (DSP), etc. In another implementation, the processor may implement certain functions through logical relationships of hardware circuits. The logical relationships of the hardware circuits may be fixed or reconfigurable. For example, the processor is a hardware circuit implemented by an Application-Specific Integrated Circuit (ASIC) or a Programmable Logic Device (PLD), such as an FPGA. In a reconfigurable hardware circuit, a process in which the processor loads a configuration document to implement configuration of the hardware circuit may be understood as a process in which the processor loads instructions to implement part or all functions of the units or modules. In addition, it may also be a hardware circuit designed for artificial intelligence, which may be understood as an ASIC, such as a Neural Network Processing Unit (NPU), a Tensor Processing Unit (TPU), a Deep learning Processing Unit (DPU), etc.

FIG. 7A is a schematic structural diagram of a terminal device 101 provided in the embodiments of the present disclosure. As shown in FIG. 7A, the terminal device 101 may include at least one of a transceiver module 7101 and a processing module 7102. In some embodiments, the transceiver module 7101 is configured to receive first information through a first type of radio bearer, the first information being used to indicate a terminal device to determine an artificial intelligence (AI) model; and receive second information through a second type of radio bearer, the second information being used to indicate the terminal device to determine a radio resource control (RRC) configuration. Optionally, the transceiver module 7101 may be used to execute at least one of communication steps such as sending and/or receiving executed by the terminal device 101 in any of the above methods (for example, Step S2101, Step S2102, but not limited thereto), and details are not described herein again. Optionally, the processing module 7102 may be used to execute at least one of other steps executed by the terminal device 101 in any of the above methods (for example, Step S2103, Step S2104, but not limited thereto), and details are not described herein again.

FIG. 7B is a schematic structural diagram of a network device provided in the embodiments of the present disclosure. As shown in FIG. 7B, the network device 102 may include at least one of a transceiver module 7201 and a processing module 7202. In some embodiments, the transceiver module 7201 is configured to send first information through a first type of radio bearer, the first information being used to indicate a terminal device to determine an artificial intelligence (AI) model; and send second information through a second type of radio bearer, the second information being used to indicate the terminal device to determine a radio resource control (RRC) configuration. Optionally, the transceiver module 7201 may be used to execute at least one of communication steps such as sending and/or receiving executed by the network device 102 in any of the above methods (for example, Step S2101, Step S2102, but not limited thereto), and details are not described herein again. Optionally, the processing module 7202 may be used to execute at least one of other steps executed by the network device 102 in any of the above methods (for example, Step S2103, Step S2104, but not limited thereto), and details are not described herein again.

In some embodiments, the transceiver module may include a sending module and/or a receiving module. The sending module and the receiving module may be separated or integrated together. Optionally, the transceiver module may be interchangeable with a transceiver.

In some embodiments, the processing module may be one module or may include multiple sub-modules. Optionally, the multiple sub-modules respectively execute all or part of steps required to be executed by the processing module. Optionally, the processing module may be interchangeable with a processor.

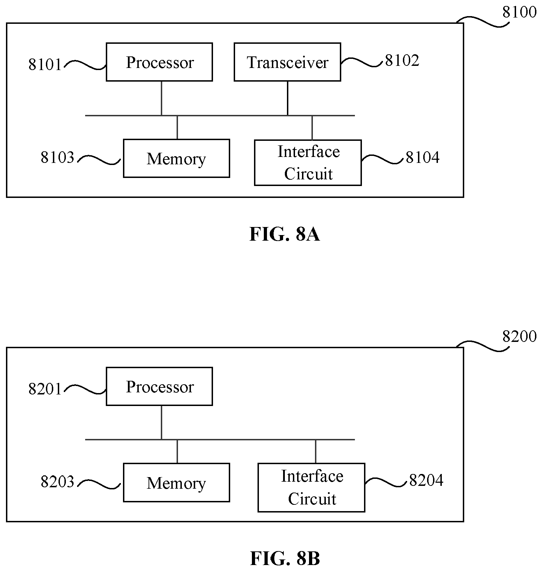

FIG. 8A is a schematic structural diagram of a communication device 8100 provided in the embodiments of the present disclosure. The communication device 8100 may be a network device (for example, an access network device, a core network device, etc.), or may be a terminal device (for example, user equipment, etc.), or may be a chip, a chip system, or a processor supporting the network device to implement any of the above methods, or may be a chip, a chip system, or a processor supporting the terminal device to implement any of the above methods. The communication device 8100 may be used to implement the methods described in the above method embodiments, and details may refer to the descriptions in the above method embodiments.

As shown in FIG. 8A, the communication device 8100 includes one or more processors 8101. The processor 8101 may be a general processor or a special processor, for example, a baseband processor or a central processor. The baseband processor may be used to process communication protocols and communication data. The central processor may be used to control a communication apparatus (such as a base station, a baseband chip, a terminal device, a terminal device chip, a DU or a CU, etc.), execute programs, and process data of the programs. Optionally, the communication device 8100 may be used to execute any of the above methods. Optionally, one or more processors 8101 are used to invoke instructions to cause the communication device 8100 to execute any of the above methods.

In some embodiments, the communication device 8100 may further include one or more transceivers 8102. When the communication device 8100 includes one or more transceivers 8102, the transceiver 8102 may execute at least one of communication steps such as sending and/or receiving in the above methods (for example, Step S2101, Step S2102, but not limited thereto), and the processor 8101 may execute at least one of other steps (for example, Step S2103, Step S2104, but not limited thereto).

In some embodiments, the transceiver may include a receiver and/or a transmitter. The receiver and the transmitter may be separated or integrated together. Optionally, terms such as transceiver, transceiver unit, transceiver machine, transceiver circuit, interface circuit, interface may be used interchangeably. Terms such as transmitter, sending unit, sending machine, sending circuit may be used interchangeably. Terms such as receiver, receiving unit, receiving machine, receiving circuit may be used interchangeably.

In some embodiments, the communication device 8100 further includes one or more memories 8103 for storing data. Optionally, all or part of the memory 8103 may also be outside the communication device 8100. In optional embodiments, the communication device 8100 may include one or more interface circuits 8104. Optionally, the interface circuit 8104 is connected to the memory 8103. The interface circuit 8104 may be used to receive data from the memory 8103 or other devices, and may be used to send data to the memory 8103 or other devices. For example, the interface circuit 8104 may read data stored in the memory 8103 and send the data to the processor 8101.

The communication device 8100 described in the above embodiments may be a network device or a terminal device, but the scope of the communication device 8100 described in the present disclosure is not limited thereto. The structure of the communication device 8100 is not limited by FIG. 8A. The communication device may be an independent device or may be part of a larger device. For example, the communication device may be: (1) an independent integrated circuit (IC), or a chip, or a chip system or subsystem; (2) a collection having one or more ICs, and optionally, the above IC collection may also include a storage component for storing data and programs; (3) an ASIC, such as a modem; (4) a module that may be embedded in other devices; (5) a receiver, a terminal device, an intelligent terminal device, a cellular phone, a wireless device, a handset, a mobile unit, a vehicle-mounted device, a network device, a cloud device, an artificial intelligence device, etc.; (6) other devices, etc.

FIG. 8B is a schematic structural diagram of a chip 8200 provided in the embodiments of the present disclosure. When the communication device 8100 is a chip or a chip system, reference may be made to the structural schematic diagram of the chip 8200 shown in FIG. 8B, but is not limited thereto.

The chip 8200 includes one or more processors 8201. The chip 8200 is used to execute any of the above methods.

In some embodiments, the chip 8200 further includes one or more interface circuits 8204. Optionally, terms such as interface circuit, interface, transceiver pin may be used interchangeably. In some embodiments, the chip 8200 further includes one or more memories 8203 for storing data. Optionally, all or part of the memory 8203 may be outside the chip 8200.

Optionally, the interface circuit 8204 is connected to the memory 8203. The interface circuit 8204 may be used to receive data from the memory 8203 or other devices. The interface circuit 8204 may be used to send data to the memory 8203 or other devices. For example, the interface circuit 8204 may read data stored in the memory 8203 and send the data to the processor 8201.

In some embodiments, the interface circuit 8204 executes at least one of communication steps such as sending and/or receiving in the above methods (for example, Step S2101, Step S2102, but not limited thereto). Execution of communication steps such as sending and/or receiving by the interface circuit 8204 means that the interface circuit 8204 performs data interaction between the processor 8201, the chip 8200, the memory 8203, or transceiver components. In some embodiments, the processor 8201 may execute at least one of other steps (for example, Step S2103, Step S2104, but not limited thereto).

The modules and/or devices described in various embodiments such as virtual devices, physical devices, chips, etc., may be arbitrarily combined or separated according to circumstances. Optionally, part or all steps may also be cooperatively executed by multiple modules and/or devices, which is not limited herein.

The embodiments of the present disclosure further provide a storage medium. The storage medium stores instructions. When the instructions are executed on the communication device 8100, the communication device 8100 is caused to execute any of the above methods. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The embodiments of the present disclosure further provide a program product. When the program product is executed by the communication device 8100, the communication device 8100 is caused to execute any of the above methods. Optionally, the program product may be a computer program product.

The embodiments of the present disclosure further provide a computer program. When the computer program runs on a computer, the computer is caused to execute any of the above methods.

## Claims

1. An information processing method, wherein the method comprises:
receiving first information through a first type of radio bearer, wherein the first information is used to indicate a terminal device to determine an artificial intelligence (AI) model; and
receiving second information through a second type of radio bearer, wherein the second information is used to indicate the terminal device to determine a radio resource control (RRC) configuration.

2. The method according to claim 1, wherein the method further comprises:
determining a processing order of the first information and the second information.

3. The method according to claim 2, wherein determining the processing order of the first information and the second information comprises:
taking a first reception order as the processing order, wherein the first reception order is a time sequence in which the terminal device receives the first information or the second information.

4. The method according to claim 2, wherein determining the processing order of the first information and the second information comprises:
determining the processing order of the first information and the second information according to a type of radio bearer.

5. The method according to claim 4, wherein the method further comprises:
processing the first information and/or the second information according to the processing order.

6. The method according to claim 5, wherein processing the first information and/or the second information according to the processing order comprises any one of the following:
a reception time of the first information being earlier than a reception time of the second information, when processing of the first information is not finished, processing the second information; and
a reception time of the first information being earlier than a reception time of the second information, when processing of the first information is not finished, suspending processing of the first information and first processing the second information.

7. The method according to claim 6, wherein processing of the first information being not finished comprises any one of the following:
not finishing decoding of the first information;
not finishing verification of the first information;
not finishing retransmission of the first information; and
not finishing an action indicated by the first information.

8. The method according to any one of claims 5 to 7, wherein the second information is a plurality of pieces of second information, and processing the first information and/or the second information according to the processing order comprises:
processing the plurality of pieces of second information according to a second reception order, wherein the second reception order is a time sequence in which the terminal device receives the second information.

9. The method according to claim 8, wherein processing the plurality of pieces of second information according to the second reception order comprises:
after processing second information received at a first time, processing second information received at a second time, wherein the second time is later than the first time.

10. The method according to any one of claims 5 to 7, wherein the first information is a plurality of pieces of first information, and processing the first information and/or the second information according to the processing order comprises:
processing the plurality of pieces of first information according to a third reception order, wherein the third reception order is a time sequence in which the terminal device receives the first information.

11. The method according to claim 10, wherein processing the plurality of pieces of first information according to the third reception order comprises:
after processing first information received at a third time, processing first information received at a fourth time, wherein the fourth time is later than the third time.

12. The method according to claim 5, wherein processing the first information and/or the second information according to the processing order comprises:
a reception time of the first information being later than a reception time of the second information, when processing of the second information is not finished, processing the first information;
a reception time of the first information being later than a reception time of the second information, when processing of the second information is not finished, suspending processing of the second information and first processing the first information.

13. The method according to any one of claims 1 to 12, wherein the radio bearer is a signaling radio bearer (SRB).

14. The method according to claim 13, wherein the second type of radio bearer comprises at least one of: SRB0, SRB1, SRB2, SRB3, or SRB4.

15. The method according to claim 14, wherein the first type of radio bearer is different from the second type of radio bearer.

16. The method according to any one of claims 1 to 15, wherein the AI model is used to obtain a model prediction result according to a measurement result of the terminal device.

17. An information processing method, wherein the method comprises:
sending first information through a first type of radio bearer, wherein the first information is used to indicate a terminal device to determine an artificial intelligence (AI) model; and
sending second information through a second type of radio bearer, wherein the second information is used to indicate the terminal device to determine a radio resource control (RRC) configuration.

18. The method according to claim 17, wherein the radio bearer is a signaling radio bearer (SRB).

19. The method according to claim 18, wherein the second type of radio bearer comprises at least one of: SRB0, SRB1, SRB2, SRB3, or SRB4.

20. The method according to claim 19, wherein the first type of radio bearer is different from the second type of radio bearer.

21. The method according to any one of claims 17 to 20, wherein the AI model is used to obtain a model prediction result according to a measurement result of the terminal device.

22. A terminal device, comprising:
a transceiver module, configured to receive first information through a first type of radio bearer, wherein the first information is used to indicate the terminal device to determine an artificial intelligence (AI) model; and receive second information through a second type of radio bearer, wherein the second information is used to indicate the terminal device to determine a radio resource control (RRC) configuration.

23. A network device, comprising:
a transceiver module, configured to send first information through a first type of radio bearer, wherein the first information is used to indicate a terminal device to determine an artificial intelligence (AI) model; and send second information through a second type of radio bearer, wherein the second information is used to indicate the terminal device to determine a radio resource control (RRC) configuration.

24. A communication device, comprising:
one or more processors;
wherein the communication device is configured to execute the information processing method according to any one of claims 1 to 16 or claims 17 to 21.

25. A storage medium storing instructions, wherein when the instructions are executed on a communication device, the communication device is caused to execute the information processing method according to any one of claims 1 to 16 or claims 17 to 21.
